# FASCICULE DE BREVET EUROPEEN

(11) **EP 0 631 072 B1**
(45) Date de publication et mention de la délivrance du brevet: **15.01.1997**
(21) Numéro de dépôt: 94420169.8
(22) Date de dépôt: 13.06.1994
(51) Int. Cl.: F16J 15/32

(54) **Joint d'étanchéité pour arbre tournant**
Dichtung für Drehwelle
Seal for rotating shaft

(30) Priorité: 14.06.1993 FR 9307347
(43) Date de publication de la demande: 28.12.1994
(73) Titulaire: P.I.V. S.A., 69100 Villeurbanne (FR)
(72) Inventeur: Ducugnon, Jean, F-69300 Caluire (FR); Faure, Eugène, F-69006 Lyon (FR)
(74) Mandataire: Bratel, Gérard

(56) Documents cités:
- EP-A- 0 091 983
- DE-A- 3 902 058
- FR-A- 2 598 478
- GB-A- 590 874
- GB-A- 879 503
- US-A- 3 214 180

## Description

La présente invention concerne un joint d'étanchéité pour arbre tournant, ce joint annulaire étant prévu pour être monté, et pour assurer l'étanchéité, entre un arbre tournant d'une machine ou d'un mécanisme et une partie fixe traversée par l'arbre. De manière connue, le joint d'étanchéité selon l'invention comprend :
- une bague de frottement prévue pour être emmanchée sur l'arbre et pour tourner avec ce dernier,
- une bague d'étanchéité dont le profil possède une allure en "U" ou en "C", avec une lèvre souple maintenue en pression contre la face extérieure cylindrique de la bague de frottement, et raccordée selon une zone d'épaisseur réduite à une partie annulaire intermédiaire, et avec une partie cylindrique périphérique prévue pour être solidarisée avec ladite partie fixe,
- un élément annulaire de protection intérieure, dont la partie périphérique est solidarisée avec la bague d'étanchéité, et dont le bord circulaire intérieur prend place au voisinage d'une extrémité de la bague de frottement tout en présentant un jeu radial par rapport à l'arbre tournant, ou à la bague de frottement, et
- un élément annulaire de protection extérieure, dont la partie périphérique est solidarisée avec la bague d'étanchéité, et dont le bord circulaire intérieur prend place au voisinage de l'autre extrémité de la bague de frottement tout en présentant un jeu radial par rapport à l'arbre tournant ou à la bague de frottement.

Des joints d'étanchéité pour arbre tournant, de ce genre, sont déjà connus par les documents EP-A-0091983, GB-A-590874 et GB-A-879503. Dans un tel joint d'étanchéité, la lèvre souple de la bague d'étanchéité est protégée par les éléments annulaires de protection intérieure et extérieure, pour éviter sa détérioration par abrasion dans le cas d'une utilisation dans un environnement pollué, qu'il s'agisse d'une ambiance poussiéreuse du côté extérieur du joint, ou d'impuretés contenues dans le fluide à étancher, tel que de l'huile, présent du côté intérieur du joint. De plus, les éléments annulaires de protection évitent la détérioration de la lèvre souple, habituellement fragile, qui est la partie active du joint d'étanchéité, lors du montage de ce joint autour de l'arbre.

Dans les réalisations actuellement connues, telles que celles décrites dans les documents précités, les éléments annulaires de protection sont conformés et disposés de manière à constituer une sorte de boîtier ou de cage, qui enferme entièrement la bague d'étanchéité, en la recouvrant notamment sur toute sa périphérie. Ces éléments annulaires de protection augmentent donc l'encombrement du joint d'étanchéité, aussi bien dans le sens axial que dans le sens radial, et les dimensions du joint complet sont fortement supérieures à celles de la seule bague d'étanchéité. Il n'est donc pas possible de monter un tel joint d'étanchéité composite en lieu et place d'une simple bague d'étanchéité.

Par ailleurs, dans les réalisations connues, les éléments annulaires de protection intérieure et extérieure conservent un jeu relativement important par rapport à la périphérie de l'arbre tournant ou de la bague de frottement, de sorte que des impuretés peuvent pénétrer à l'intérieur du joint vers la lèvre souple ; ainsi, ces éléments annulaires ne protègent qu'imparfaitement la lèvre contre les pollutions extérieures.

La présente invention vise à remédier à ces inconvénients, en fournissant un joint d'étanchéité pour arbre tournant du genre considéré, possédant un encombrement réduit tout en assurant une protection améliorée de la lèvre souple.

Le joint d'étanchéité pour arbre tournant selon l'invention est remarquable en ce que l'élément annulaire de protection intérieure et l'élément annulaire de protection extérieure sont inscrits dans l'encombrement axial et radial de la bague d'étanchéité.

Selon une forme de réalisation préférée de l'invention, l'élément annulaire de protection intérieure est une pièce rigide possédant une partie annulaire plane, dont le bord circulaire intérieur coopère avec une extrémité de la bague de frottement, et une partie périphérique cylindrique emmanchée et collée dans la partie périphérique de la bague d'étanchéité.

Dans un mode d'exécution de l'invention, l'élément annulaire de protection extérieure est, lui aussi, une pièce rigide possédant une partie annulaire plane, dont le bord circulaire intérieur coopère avec l'autre extrémité de la bague de frottement, et une partie périphérique cylindrique emmanchée et collée dans la bague d'étanchéité, en avant de la zone de raccordement de la lèvre souple.

Dans une variante de l'invention, l'élément annulaire de protection extérieure est constitué par un prolongement annulaire d'une armature intérieure rigide de la bague d'étanchéité, le prolongement annulaire s'étendant à l'extérieur de la matière souple de cette bague en direction de son axe central, pour prendre place à proximité d'une extrémité de la bague de frottement. Cette variante permet de supprimer une pièce ; elle nécessite toutefois une fabrication spéciale de la bague d'étanchéité.

L'élément annulaire de protection intérieure peut comporter au moins deux trous pour la circulation d'un fluide à étancher présent à l'intérieur de la partie fixe traversée par l'arbre tournant. Dans ce cas, on peut en outre monter un filtre annulaire dans l'évidemment annulaire de la bague d'étanchéité, résultant de son profil en "U" ou en "C", le filtre annulaire venant au contact de la partie annulaire plane de l'élément de protection intérieure pourvue de trous.

La conception du joint d'étanchéité selon l'invention permet de renforcer l'efficacité d'une bague d'étanchéité à lèvre souple pour arbre tournant de type connu, tout en respectant les dimensions extérieures d'un joint standard. En particulier, contrairement à toutes les réalisations connues de l'état de la technique, les éléments annulaires de protection intérieure et extérieure, et le cas échéant le filtre, prennent place dans l'encombrement axial et radial de la bague d'étanchéité, dont les parties creuses sont judicieusement utilisées. Seule l'intégration de la bague de frottement dans le joint selon l'invention nécessite une certaine diminution locale de diamètre de l'arbre tournant, pour recevoir cette bague de frottement qui sert de portée à la lèvre souple.

Dans le cas d'un joint d'étanchéité selon l'invention destiné à être utilisé dans une ambiance très polluée, l'élément annulaire de protection extérieure comporte avantageusement une double zone de friction relativement à la bague de frottement. La double zone de friction peut résulter de la coopération des deux parties précitées de l'élément annulaire de protection extérieure avec, respectivement, une pièce annulaire en tôle mince montée sur une extrémité de la bague de frottement, et cette extrémité de la bague de frottement. Cette double zone de friction peut aussi être obtenue, sans aucune pièce supplémentaire, par la coopération des deux parties précitées de l'élément annulaire de protection extérieure avec, respectivement, la face frontale de la bague de frottement et une collerette de cette bague de frottement.

Ce joint d'étanchéité peut fonctionner avec un jeu axial réduit, entre la ou les faces frontales de la bague de frottement et les bords circulaires intérieurs de l'un au moins des éléments de protection intérieure et extérieure, ce jeu étant déterminé lors de l'assemblage du joint et pouvant, notamment, être réglé par interposition d'une matière consommable par usure.

Enfin, l'espace libre annulaire situé devant la lèvre souple de la bague d'étanchéité peut être mis à profit pour retenir de la graisse de nature adaptée aux conditions d'utilisation du joint, laquelle renforce encore la protection de la partie active de la lèvre souple contre les impuretés provenant de l'extérieur.

De toute façon, l'invention sera mieux comprise à l'aide de la description qui suit, en référence au dessin schématique annexé représentant, à titre d'exemples non limitatifs, quelques formes d'exécution de ce joint d'étanchéité pour arbre tournant :
Figure 1 est une vue en coupe, suivant un plan passant par l'axe de l'arbre, d'une première forme d'exécution du joint d'étanchéité selon l'invention ;
Figure 2 est une vue en coupe, similaire à figure 1, d'une deuxième forme d'exécution ;
Figure 3 est une vue en coupe, similaire aux figures précédentes, relative à une troisième forme d'exécution ;
Figure 4 est une vue en coupe, similaire aux figures précédentes, d'une quatrième forme d'exécution ;
Figure 5 illustre, toujours en coupe, une variante du joint d'étanchéité de figure 4 ;
Figure 6 est une vue en coupe d'une dernière forme d'exécution.

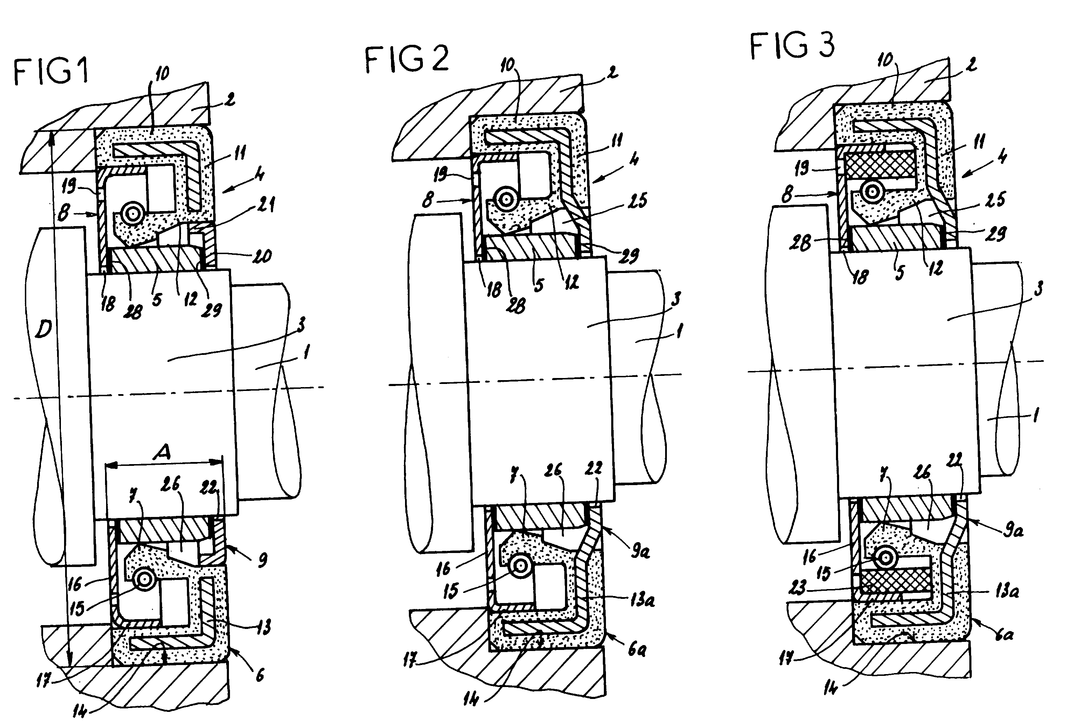

La figure 1 montre partiellement un arbre 1, monté tournant par rapport à une partie fixe 2 telle qu'un carter, qu'il traverse. L'arbre 1 possède une portée 3, autour de laquelle est monté le joint d'étanchéité objet de l'invention, désigné dans son ensemble par le repère 4. D'une manière générale, le joint d'étanchéité 4 se compose d'une bague de frottement 5, d'une bague d'étanchéité 6 à lèvre souple 7, d'un élément annulaire de protection intérieure 8 et d'un élément annulaire de protection extérieure 9, tous ces composants étant coaxiaux.

La bague de frottement 5, en matière dure traitée, est emmanchée de façon serrée sur la portée 3 de l'arbre 1, et elle tourne avec ce dernier.

La bague d'étanchéité 6 est réalisée en matière souple, et son profil possède une allure générale en "U" ou en "C". Outre sa lèvre 7, la bague d'étanchéité 8 présente une partie cylindrique périphérique 10 et une partie annulaire intermédiaire 11, à laquelle la lèvre souple 7 se raccorde selon une zone d'épaisseur réduite 12. Dans les parties périphérique 10 et intermédiaire 11 est noyée une armature intérieure rigide 13, présentant un profil en "L".

Lorsque le joint d'étanchéité 4 est monté, la partie périphérique 10 de la bague d'étanchéité 6 est engagée dans un logement correspondant 14 de la partie fixe 2, où elle est immobilisée notamment par collage. La lèvre souple 7 de la bague d'étanchéité 6 vient alors au contact de la surface extérieure de la bague de frottement 5. Un ressort hélicoïdal 15, enroulé en anneau et porté extérieurement par la lèvre souple 7, maintient cette lèvre 7 en pression contre la face extérieure cylindrique de la bague de frottement 5 qui lui sert de portée.

L'élément de protection intérieure 8, rigide, possède une partie annulaire plane 16, et une partie périphérique cylindrique 17. Le bord circulaire intérieur de la partie annulaire 16 présente un jeu radial 18 par rapport à la portée 3 de l'arbre 1, et il prend place au voisinage d'une face frontale de la bague de frottement 5. Des trous 19 peuvent être ménagés dans la partie annulaire 16, pour la circulation d'un fluide à étancher présent à l'intérieur de la partie fixe 2. La partie périphérique 17 de l'élément de protection intérieure 8 est emmanchée et collée dans la partie périphérique 10 de la bague d'étanchéité 6.

L'élément de protection extérieure 9, rigide, possède lui aussi une partie annulaire plane 20 et une partie périphérique cylindrique 21. Le bord circulaire intérieur de la partie annulaire 20 présente un jeu radial 22 par rapport à la portée 3 de l'arbre 1, et il prend place au voisinage de l'autre face frontale de la bague de frottement 5. La partie périphérique 21 de l'élément de protection extérieure 9 est emmanchée et collée dans la bague d'étanchéité 6, en avant de la zone de raccordement 12 de la lèvre 7.

La liaison des éléments de protection intérieure 8 et extérieure 9 avec la bague d'étanchéité 6, et la présence de ces deux éléments 8 et 9 de part et d'autre de la bague de frottement 5, permet de réaliser un joint d'étanchéité 4 complet dont tous les composants sont préassemblés, et qui peut être monté aisément, sans risque de détérioration de la lèvre souple 7. Les éléments 8 et 9 protègent la lèvre 7 contre le surcharges et turbulences du fluide à étancher, et contre les poussières provenant de l'extérieur. Tel qu'il est réalisé, le joint d'étanchéité 4 de la figure 1 est adapté pour un arbre 1 tournant à grande vitesse. On notera que le joint 4 de la figure 1 utilise une bague d'étanchéité 6 qui peut être d'un type standard, disponible dans le commerce. Enfin, il est important de remarquer que les éléments de protection intérieure 8 et extérieure 9 s'inscrivent, l'un et l'autre, dans l'encombrement axial (épaisseur A) et dans l'encombrement radial (diamètre extérieur D) de cette bague d'étanchéité 6.

La figure 2 montre une autre forme d'exécution du joint d'étanchéité 4, aussi adaptée à un arbre 1 tournant à grande vitesse, mais comportant une bague d'étanchéité 6a de structure spéciale, incorporant l'élément de protection extérieure. A cet effet, l'armature intérieure rigide 13a de la bague d'étanchéité 6a est prolongée, à l'extérieur de la matière souple de cette bague 6a et en direction de l'axe central, de manière à former une partie annulaire rigide 9a, prenant place devant une face frontale de la bague de frottement 5 en ménageant toujours un jeu radial 22. Ainsi, la partie annulaire 9a prolongeant l'armature 13a réalise, du point de vue fonctionnel, l'équivalent de l'élément de protection extérieure 9 de la figure 1.

La figure 3 montre une autre forme d'exécution du joint d'étanchéité 4, découlant de celle de la figure 2 mais adaptée pour un arbre 1 tournant à vitesse faible. L'évidement annulaire de la bague d'étanchéité 6a, résultant de son profil en "U" ou en "C", reçoit ici un filtre annulaire 23 en matière poreuse qui vient au contact de la partie annulaire 16 de l'élément de protection intérieure 8, pourvue de trous 19. Le filtre 23 est immobilisé entre les parties 16 et 17 de l'élément de protection intérieure 8, la partie annulaire intermédiaire 11 de la bague d'étanchéité 6a et le ressort 15.

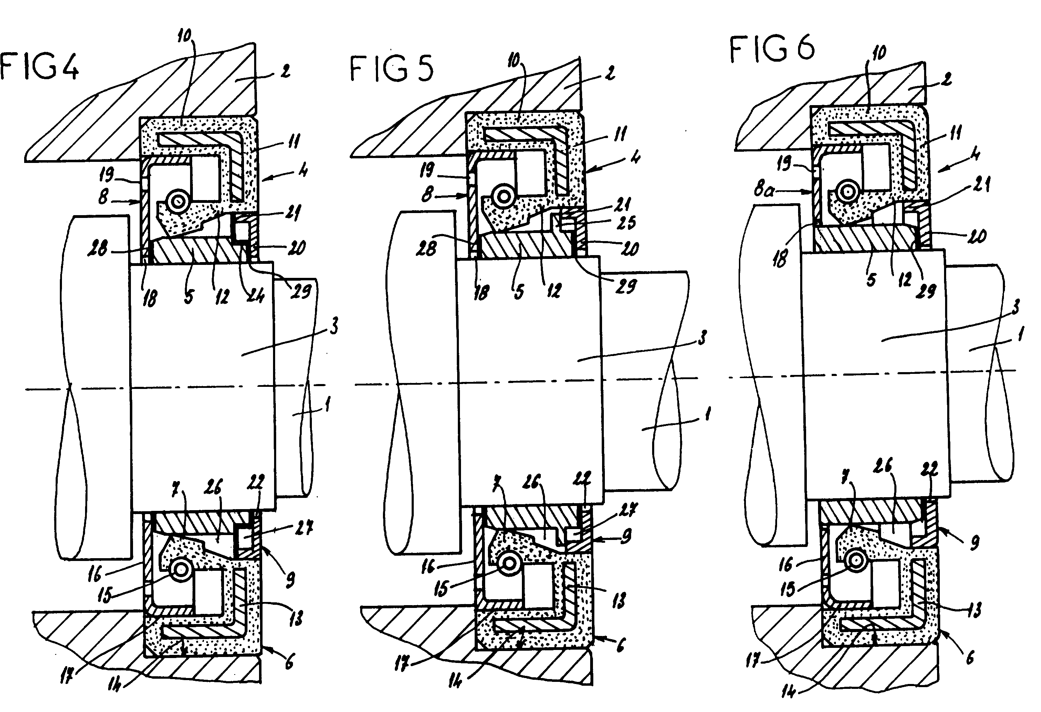

Le joint d'étanchéité 4 de la figure 4 découle de celui de la figure 1, mais comporte, pour son adaptation à une ambiance très poussiéreuse, une double zone de friction du côté de l'élément de protection extérieure 9. A cet effet, une pièce annulaire 24 en tôle mince, de section en "L", est montée sur une extrémité de la bague de frottement 5, pourvue d'un épaulement annulaire complémentaire. La pièce annulaire 24 tourne ainsi avec l'arbre 1 et la bague de frottement 5. Cette pièce annulaire 24 coopère, par sa périphérie, avec le bord postérieur de la partie cylindrique 21 de l'élément de protection extérieure 9, tandis que la face frontale de la bague de frottement 5 coopère avec le bord intérieur de l'élément de protection extérieure 9.

La figure 5 illustre une variante du joint de la figure 4, dans laquelle la pièce annulaire 24 est remplacée par une collerette 25 de la bague de frottement 5, pour obtenir ici aussi une double zone de friction du côté de l'élément de protection extérieure 9. La face frontale de la bague de frottement 5 coopère avec le bord intérieur de la partie annulaire 20 de l'élément de protection extérieure 9, tandis que la périphérie de la collerette 25 coopère avec le bord postérieur de la partie cylindrique 21 de l'élément de protection extérieure 9.

La figure 6 représente une dernière forme de réalisation du joint d'étanchéité 4, qui diffère des précédentes par son élément de protection intérieure 8a. Le bord circulaire de la partie annulaire plane 16 de l'élément 8a n'est pas situé ici en regard d'une face frontale de la bague de frottement 5. En effet, la partie annulaire plane 16 de l'élément de protection intérieure 8a entoure ici une extrémité de la bague de frottement 5 réalisée plus longue, et elle présente un jeu radial 18 par rapport à la surface cylindrique extérieure de la bague de frottement 5. Par contre, l'élément de protection extérieure 9 est réalisé comme précédemment, son bord circulaire intérieur prenant place en regard de l'autre face frontale de la bague de frottement 5.

Selon une variante non représentée, découlant de la forme de réalisation précédente, le bord circulaire intérieur de l'élément de protection extérieure peut, lui aussi, entourer une extrémité de la bague de frottement, au lieu de venir en regard d'une face frontale de cette bague.

Dans tous les cas, l'espace libre annulaire 26 situé devant la lèvre souple 7, entre celle-ci et la bague de frottement 5, peut être rempli de graisse qui renforce la protection de la partie active du joint 4 contre les impuretés provenant de l'extérieur. Dans les formes d'exécution des figures 4 et 5, de la graisse ayant la même fonction peut aussi être introduite dans la chambre annulaire 27 formée entre l'élément de protection extérieure 9 et la pièce annulaire 24, ou entre cet élément de protection extérieure 9 et la collerette 25.

Le réglage du jeu axial, entre les deux faces frontales de la bague de frottement 5 et les éléments de protection intérieure 8 et extérieure 9, est réalisable par interposition d'une matière consommable par usure, telle qu'une cire dure lubrifiante ou de l'étain, comme indiqué schématiquement en 28 et 29.

Comme il va de soi, l'invention ne se limite pas aux seules formes d'exécution de ce joint d'étanchéité pour arbre tournant qui ont été décrites ci-dessus à titre d'exemples ; elle en embrasse, au contraire, toutes les variantes de réalisation et d'application respectant le même principe et couvertes par les revendications énoncées ci-après. C'est ainsi, notamment, que l'on ne s'éloignerait pas du cadre de l'invention en modifiant les formes de détail des différents composants du joint d'étanchéité, ou en combinant de manière différente les caractéristiques illustrées par le dessin, par exemple en prévoyant le filtre annulaire 23 (figure 3) dans une configuration de joint selon la figure 1 ou selon la figure 6.

## Revendications

1. Joint d'étanchéité annulaire (4) prévu pour être monté entre un arbre tournant (1,3) et une partie fixe (2) traversée par l'arbre (1,3), comprenant :
- une bague de frottement (5) prévue pour être emmanchée sur l'arbre (1,3) et pour tourner avec ce dernier,
- une bague d'étanchéité (6 ; 6a) dont le profil possède une allure en "U" ou en "C", avec une lèvre souple (7) maintenue en pression contre la face extérieure cylindrique de la bague de frottement (5), et raccordée selon une zone d'épaisseur réduite (12) à une partie annulaire intermédiaire (11), et avec une partie cylindrique périphérique (10) prévue pour être solidarisée avec ladite partie fixe (2),
- un élément annulaire de protection intérieure (8 ; 8a), dont la partie périphérique (17) est solidarisée avec la bague d'étanchéité (6 ; 6a), et dont le bord circulaire intérieur prend place au voisinage d'une extrémité de la bague de frottement (5) tout en présentant un jeu radial (18) par rapport à l'arbre tournant (1,3), ou à la bague de frottement (5), et
- un élément annulaire de protection extérieure (9 ; 9a), dont la partie périphérique (21) est solidarisée avec la bague d'étanchéité (6 ; 6a) et dont le bord circulaire intérieur prend place au voisinage de l'autre extrémité de la bague de frottement (5) tout en présentant un jeu radial (22) par rapport à l'arbre tournant (1,3), ou à la bague de frottement (5), caractérisé en ce que l'élément annulaire de protection intérieure (8) et l'élément annulaire de protection extérieure (9 ; 9a) sont inscrits dans l'encombrement axial (A) et radial (D) de la bague d'étanchéité (6 ; 6a).

2. Joint d'étanchéité pour arbre tournant selon la revendication 1, caractérisé en ce que l'élément annulaire de protection intérieure (8 ; 8a) est une pièce rigide possèdant une partie annulaire plane (16), dont le bord circulaire intérieur coopère avec une extrémité de la bague de frottement (5), et une partie périphérique cylindrique (17) emmanchée et collée dans la partie périphérique (10) de la bague d'étanchéité (6 ; 6a).

3. Joint d'étanchéité pour arbre tournant selon la revendication 2, caractérisé en ce que l'élément annulaire de protection extérieure (9) est une pièce rigide possédant une partie annulaire plane (20), dont le bord circulaire intérieur coopère avec l'autre extrémité de la bague de frottement (5), et une partie périphérique cylindrique (21) emmanchée et collée dans la bague d'étanchéité (6), en avant de la zone de raccordement (12) de la lèvre souple (7).

4. Joint d'étanchéité pour arbre tournant selon la revendication 2, caractérisé en ce que l'élément annulaire de protection extérieure (9a) est constitué par un prolongement annulaire d'une armature intérieure rigide (13a) de la bague d'étanchéité (6a), le prolongement annulaire (9a) s'étendant à l'extérieur de la matière souple de cette bague (6a) en direction de son axe central, pour prendre place à proximité d'une extrémité de la bague de frottement (5).

5. Joint d'étanchéité pour arbre tournant selon l'une quelconque des revendications 1 à 4, caractérisé en ce que l'élément annulaire de protection extérieure (9 ; 9a) comporte une double zone de friction relativement à la bague de frottement (5).

6. Joint d'étanchéité pour arbre tournant selon la revendication 5, caractérisé en ce que la double zone de friction résulte de la coopération des deux parties précitées (20,21) de l'élément annulaire de protection extérieure (9) avec, respectivement, une pièce annulaire en tôle mince (24) montée sur une extrémité de la bague de frottement (5), et cette extrémité de la bague de frottement (5).

7. Joint d'étanchéité pour arbre tournant selon la revendication 5, caractérisé en ce que la double zone de friction résulte de la coopération des deux parties précitées (20,21) de l'élément annulaire de protection extérieure (9) avec, respectivement, la face frontale de la bague de frottement (5) et une collerette (25) de cette bague de frottement (5).

8. Joint d'étanchéité pour arbre tournant selon l'une quelconque des revendications 1 à 7, caractérisé en ce que le jeu axial, entre le ou les faces frontales de la bague de frottement (5) et le bord circulaire intérieur de l'un au moins des éléments annulaires de protection intérieure (8) et extérieure (9 ; 9a), est prévu pour être réglé par interposition d'une matière consommable par usure (28,29).

9. Joint d'étanchéité pour arbre tournant selon l'une quelconque des revendications 1 à 8, dans lequel l'élément de protection intérieure (8 ; 8a) comporte dans sa partie annulaire plane (16) au moins deux trous (19) pour la circulation d'un fluide à étancher présent à l'intérieur de la partie fixe (2) traversée par l'arbre tournant (1,3), caractérisé en ce qu'un filtre annulaire (23) est monté dans l'évidement annulaire de la bague d'étanchéité (6), résultant de son profil en "U" ou en "C", le filtre annulaire (23) venant au contact de la partie annulaire plane (16) de l'élément de protection intérieure (8 ; 8a) pourvue des trous (19).

10. Joint d'étanchéité pour arbre tournant selon l'une quelconque des revendications 1 à 9, caractérisé en ce que l'espace libre annulaire (26) situé devant la lèvre souple (7) de la bague d'étanchéité (6) est rempli de graisse.

## Patentansprüche

1. Ringförmige Dichtung für die Montage zwischen einer Drehwelle (1, 3) und eines von der Welle (1, 3) durchquerten festen Bauteils (2), die beinhaltet:
- einen Reibring (5) zum Aufschrumpfen auf die Welle (2), so daß sich dieser mit der Welle dreht,
- einen Dichtring (6, 6a), dessen Profil den Verlauf eines "U" oder "C" besitzt, mit einer nachgiebigen Lippe (7), die gegen die zylindrische Außenfläche des Reibringes (5) gedrückt ist, und entlang einer Zone mit kleinerer Dicke mit einem ringförmigen Zwischenbereich (11) und mit einem zylindrischen Randbereich (10), der zur Festlegung an besagtem festen Bauteil (2) dient, verbunden ist,
- ein ringförmiges inneres Schutzelement (8, 8a), dessen Randbereich (17) mit dem Dichtring (6, 6a) fest verbunden ist und dessen umlaufender innerer Rand in der Nähe eines Endes des Reibringes (5) mit einem Radialspiel (19) in Bezug auf die Drehwelle (1, 3) oder auf den Reibring (5) angeordnet ist, und
- ein ringförmiges äußeres Schutzelement (9, 9a), dessen Randbereich (21) fest mit dem Dichtring (6, 6a) verbunden ist und dessen innere umlaufende Kante in der Nähe des anderen Endes des Dichtringes (5) mit einem Radialspiel (22) in bezug auf die Drehwelle (1, 3) oder auf den Reibring (5) angeordnet ist,
**dadurch gekennzeichnet, daß**
das ringförmige innere Schutzelement (8, 8a) und das ringförmige äußere Schutzelement (9, 9a) innerhalb der axialen (A) und radialen (D) Abmessungen des Dichtringes liegen.

2. Dichtung für Drehwellen nach Anspruch 1, **dadurch gekennzeichnet, daß** das ringförmige Schutzelement (8, 8a) ein festes Bauteil ist, das einen ebenen ringförmigen Bereich (16), dessen umlaufende innere Kante mit einem Ende des Reibringes (5) zusammenwirkt und einen zylindrischen Randbereich (17), der in den Randbereich (10) des Dichtringes (6, 6a) eingesetzt und mit diesem verklebt ist, aufweist,

3. Dichtung für Drehwellen gemäß Anspruch 2, **dadurch gekennzeichnet, daß** das äußere ringförmige Schutzelement (9) ein festes Bauteil ist, das einen ebenen ringförmigen Teilbereich (20), dessen umlaufende innere Kante mit dem anderen Ende des Reibringes (5) zusammenwirkt und einen zylindrischen Randbereich (21), der in den Dichtring (6) vor der Verbindungszone (12) der Dichtlippe (7) eingesetzt und verklebt ist, aufweist.

4. Dichtung für Drehwellen gemäß Anspruch 2, **dadurch gekennzeichnet, daß** das ringförmige äußere Schutzelement (9a) aus einer ringförmigen Verlängerung einer inneren festen Verstärkung (13a) des Dichtringes (6a) besteht, wobei sich die ringförmige Verlängerung (9a) außerhalb des nachgiebigen Materials dieses Ringes (6a) in Richtung seiner zentralen Achse erstreckt, so daß sie in der Nähe eines Endes des Reibringes (5) plaziert ist.

5. Dichtung für Drehwellen nach einem der Ansprüche 1 bis 4, **dadurch gekennzeichnet, daß** das ringförmige äußere Schutzelement (9, 9a) eine doppelte Reibzone in Bezug auf den Reibring (5) aufweist.

6. Dichtung für Drehwellen nach Anspruch 5, **dadurch gekennzeichnet, daß** sich die doppelte Reibzone aus einem Zusammenwirken der beiden vorgenannten Teilbereiche (20, 21) des ringförmigen äußeren Schutzelementes (9) mit im wesentlichen einem ringförmigen Bauteil aus dünnem Blech (24), welches an einem Ende des Reibringes (5) angeordnet ist, und diesem Ende des Reibringes (5) ergibt.

7. Dichtung für Drehwellen nach Anspruch 5, **dadurch gekennzeichnet, daß** sich die doppelte Reibzone aus einem Zusammenwirken der beiden vorgenannten Teilbereiche (20, 21) des ringförmigen äußeren Schutzelementes (9) mit im wesentlichen der Stirnseite des Reibringes (5) und einem Kragen (25) dieses Reibringes (5) ergibt.

8. Dichtung für Drehwellen nach einem der Ansprüche 1 bis 7, **dadurch gekennzeichnet, daß** das Axialspiel zwischen der oder den Stirnseite(n) des Reibringes (5) und den umlaufenden inneren Kanten wenigstens eines der ringförmigen inneren (8) und äußeren (9, 9a) Schutzelemente durch Zwischenschaltung eines durch Verschleiß (28, 29) verbrauchbaren Materials einstellbar ist.

9. Dichtung für Drehwellen nach einem der Ansprüche 1 bis 8, in der das innere Schutzelement (8, 8a) in seinem ebenen ringförmigen Teilbereich (16) wenigstens zwei Löcher (19) für die Zirkulation der abzudichtenden Flüssigkeit, die sich im Inneren des von der Drehwelle (1, 3) durchquerten festen Bauteils (2) befindet, aufweist, **dadurch gekennzeichnet, daß** ein ringförmiges Filterelement (23) in dem ringförmigen Zwischenraum des Dichtringes (6) angeordnet ist, der sich aus dem U-förmigen oder C-förmigen Profil ergibt, wobei der ringförmige Filter (23) mit dem ebenen ringförmigen Teilbereich 16 des inneren Schutzelementes (8, 8a), welches mit Löchern (19) versehen ist, in Kontakt kommt.

10. Dichtung für Drehwellen nach einem der Ansprüche 1 bis 9, **dadurch gekennzeichnet, daß** der ringförmige freie Zwischenraum (26), der sich vor der Dichtlippe (7) des Dichtringes (6) ergibt, mit Fett gefüllt ist.

## Claims

1. Annular seal (4) designed to be mounted between a rotating shaft (1, 3) and a fixed part (2) through which the shaft (1, 3) passes, comprising:
- a friction ring (5) designed to be fitted on the shaft (1, 3) and to rotate with the latter,
- a sealing ring (6; 6a), the profile of which has a "U" or "C" shape, with a flexible lip (7) held under pressure against the cylindrical external face of the friction ring (5), and connected, in an area of reduced thickness (12), to an intermediate annular part (11), and with a peripheral cylindrical part (10) designed to be secured to the said fixed part (2),
- an internal annular protection element (8; 8a), the peripheral part (17) of which is secured to the sealing ring (6; 6a), and the inner circular edge of which is fitted in the vicinity of one end of the friction ring (5) whilst having radial clearance (18) with respect to the rotating shaft (1, 3) or to the friction ring (5), and
- an external annular protection element (9; 9a), the peripheral part (21) of which is secured to the sealing ring (6; 6a) and the inner circular edge of which fits in the vicinity of the other end of the friction ring (5) whilst having radial clearance (22) with respect to the rotating shaft (1, 3) or to the friction ring (5), characterised in that the internal annular protection element (8) and the external annular protection element (9; 9a) fit within the axial (A) and radial (D) dimensions of the sealing ring (6; 6a).

2. Seal for a rotating shaft according to Claim 1, characterised in that the internal annular protection element (8, 8a) is a rigid piece having a plane annular part (16), the inner circular edge of which cooperates with one end of the friction ring (5), and a cylindrical peripheral part (17) fitted and bonded in the peripheral part (10) of the sealing ring (6; 6a).

3. Seal for a rotary shaft according to Claim 2, characterised in that the external annular protection element (9) is a rigid piece having a plane annular part (20), the inner circular edge of which cooperates with the other end of the friction ring (5), and a cylindrical part (21) fitted and bonded in the sealing ring (6), in front of the connection area (12) for the flexible lip (7).

4. Seal for a rotating shaft according to Claim 2, characterised in that the external annular protection element (9a) is formed by an annular extension of a rigid internal reinforcement (13a) of the sealing ring (6a), the annular extension (9a) extending outside the flexible material of this ring (6a) in the direction of its central axis, to fit close to one end of the friction ring (5).

5. Seal for a rotating shaft according to any one of Claims 1 to 4, characterised in that the external annular protection element (9; 9a) has a double friction area relatively to the friction ring (5).

6. Seal for a rotating shaft according to Claim 5, characterised in that the double friction area results from the cooperation of the aforementioned two parts (20, 21) of the external annular protection element (9) with, respectively, an annular piece made of thin sheet metal (24) mounted on one end of the friction ring (5), and this end of the friction ring (5).

7. Seal for a rotating shaft according to Claim 5, characterised in that the double friction area results from the cooperation of the aforementioned two parts (20, 21) of the external annular protection element (9) with, respectively, the front face of the friction ring (5) and a collar (25) on this friction ring (5).

8. Seal for a rotating shaft according to any one of Claims 1 to 7, characterised in that the axial clearance between the front face or faces of the friction ring (5) and the inner circular edge of at least one of the internal (8) and external (9; 9a) annular protection elements, is designed to be adjusted by interposing a material which is consumable by wear (28, 29).

9. Seal for a rotating shaft according to any one of Claims 1 to 8, in which the internal protection element (8; 8a) has in its plane annular part (16) at least two holes (19) for the circulation of a fluid to be sealed in present inside the fixed part (2) through which the rotating shaft (1, 3) passes, characterised in that an annular filter (23) is mounted in the annular recess in the sealing ring (6), resulting from its profile in the shape of a "U" or a "C", the annular filter (23) coming into contact with the plane annular part (16) of the internal protection element (8; 8a) provided with the holes (19).

10. Seal for a rotating shaft according to any one of Claims 1 to 9, characterised in that the annular free space (26) situated in front of the flexible lip (7) of the sealing ring (6) is filled with grease.
